Europäisches Patentamt

(19) European Patent Office

Office européen des brevets

(11) **EP 1 287 607 B1**

(12) **EUROPÄISCHE PATENTSCHRIFT**

(45) Veröffentlichungstag und Bekanntmachung des Hinweises auf die Patenterteilung:
**02.01.2004 Patentblatt 2004/01**

(21) Anmeldenummer: **01980039.0**

(22) Anmeldetag: **24.01.2001**

(51) Int Cl.⁷: **H02M 7/00**

(86) Internationale Anmeldenummer:
**PCT/EP2001/000737**

(87) Internationale Veröffentlichungsnummer:
**WO 2001/091277 (29.11.2001 Gazette 2001/48)**

(54) **SCHALTUNGSANORDNUNG ZUM ENTLASTETEN SCHALTEN UND VERFAHREN**

REDUCED LOAD SWITCHING DEVICE AND METHOD

CIRCUIT DE COMMUTATION DELESTEE ET PROCEDE ASSOCIE

(84) Benannte Vertragsstaaten:
**DE FR GB IT**

(30) Priorität: **19.05.2000 DE 10024859**

(43) Veröffentlichungstag der Anmeldung:
**05.03.2003 Patentblatt 2003/10**

(73) Patentinhaber: **Infineon Technologies AG
81669 München (DE)**

(72) Erfinder:
• **DEBOY, Gerald
81543 München (DE)**
• **HUESKEN, Holger
81547 München (DE)**
• **LASKA, Thomas
80796 München (DE)**

(74) Vertreter: **Bickel, Michael
Westphal & Partner
Mozartstrasse 8
80336 München (DE)**

(56) Entgegenhaltungen:
EP-A- 0 657 941    DE-A- 4 326 052
DE-A- 19 720 439    DE-A- 19 829 614
US-A- 5 331 534    US-A- 5 960 075

• **PATENT ABSTRACTS OF JAPAN vol. 018, no. 673 (E-1647), 19. Dezember 1994 (1994-12-19) & JP 06 268206 A (FUJI ELECTRIC CO LTD), 22. September 1994 (1994-09-22)**
• **PATENT ABSTRACTS OF JAPAN vol. 1995, no. 02, 31. März 1995 (1995-03-31) & JP 06 318706 A (FUJI ELECTRIC CO LTD), 15. November 1994 (1994-11-15)**
• **PATENT ABSTRACTS OF JAPAN vol. 1995, no. 05, 30. Juni 1995 (1995-06-30) & JP 07 045822 A (FUJI ELECTRIC CO LTD), 14. Februar 1995 (1995-02-14)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft eine Schaltungsanordnung zum entlasteten Schalten der im Oberbegriff des Patentanspruchs 1 genannten Art sowie ein Verfahren zum Betreiben der Schaltungsanordnung. Eine Schaltungsanordnung mit den Merkmalen des Oberbegriffs des Anspruchs 1 ist aus der US 5331534 bekannt geworden.

Demgemäss ist eine Schaltungsanordnung zum entlasteten Schalten vorgesehen,

- mit einem zwischen einem ersten und einem zweiten Versorgungspotential angeordneten Lade-Kondensator,
- mit einem steuerbaren Leistungsschalter,
- mit einer Diode, die antiparallel zur Laststrecke des Leistungsschalters geschaltet ist,
- mit einem eine Induktivität und einen Kondensator aufweisenden Schwingkreis.

Eine gattungsgemäße Schaltungsanordnung ist in der EP 0 681 759 B1 beschrieben. Solche Schaltungen können beispielsweise als Schaltnetzteil, Wechselrichter, Halb- oder Vollbrückenschaltung oder dergleichen ausgebildet sein. Wesentlicher Bestandteil dieser Schaltungen ist jeweils ein als Leistungsschalter ausgebildetes Halbleiterbauelement zum Schalten der Lasten.

Im Zuge der zunehmenden Miniaturisierung von Schaltungen für die Leistungselektronik und der damit einhergehenden Zunahme der Leistungsdichte müssen insbesondere die Leistungsschalter bei immer höheren Schaltfrequenzen betrieben werden, um dadurch eine weitere Verringerung in der Dimensionierung passiver Bauelemente zu realisieren. Wesentlich für den Markterfolg solcher Schaltungskonzepte ist eine möglichst geringe Leistungsaufnahme der Leistungsschalter. Bei Leistungsschaltern, die idealerweise gar keine Leistung aufnehmen sollten, spricht man im Falle einer Leistungsaufnahme daher auch von einer Verlustleistung.

Grundsätzlich lassen sich zwei unterschiedliche Verlustleistungstypen bei Halbleiterschaltern unterscheiden: Zum Einen die Verlustleistung während der "Ein-Phase", bei der der Leistungsschalter eingeschaltet bzw. niederohmig gesteuert ist. Diese Verluste resultieren aus der durch einen Stromfluss im Kanalbereich des Halbleiterschalters abfallenden Spannung und Driftzonenverluste. Zum Anderen gibt es auch Schaltverluste, die durch den wechselseitigen Ein- und Ausschaltvorgang des Leistungsschalters entstehen. Diese Schaltverluste entstehen dadurch, dass während des Schaltvorgangs gleichzeitig eine hohe Stromdichte und eine hohe Spannung am Halbleiterschalter anliegen. Jedoch fallen diese nur während zeitlich sehr kurzer Intervalle an, nämlich nur beim Einschalten während des Ansteigens des Stromes und beim Ausschalten während des Abklingens des Stromes auf Null. Mit steigender Schaltfrequenz gewinnen jedoch die schaltbedingten Verluste zunehmend an Bedeutung für die Gesamtverlustleistungsbilanz.

Aus dem letztgenannten Grund geht die Entwicklung heute hin zu Schaltungskonzepten, die solche Schaltverluste durch geeignete Wahl der Schaltbedingungen herabsetzten. Ein solches Konzept ist das sogenannte spannungslose Schalten, das in der einschlägigen Fachliteratur auch als "Zero Voltage Switching" (ZVS) bekannt ist. Die entsprechenden Schaltungen werden auch als resonante Schaltungen oder als Schaltungen zum spannungslosen bzw. spannungsentlasteten Schalten bezeichnet. Bei solchen Schaltungsanordnungen wird der Halbleiterschalter zu einem Zeitpunkt eingeschaltet, in dem am Schalter keine oder nur eine geringe Spannung anliegt. In diesem Fall muss der Halbleiterschalter idealerweise gar keinen Kommutierungsstrom von anderen Schaltungsteilen übernehmen, wodurch hier Einschaltverluste vernachlässigt werden können. Beim Ausschaltvorgang wird in solchen Konzepten Sorge getragen, dass der Spannungsanstieg am Bauelement so verzögert wird, dass zu keinem Zeitpunkt gleichzeitig die maximale Stromdichte und die maximale Spannung am Leistungsschalter anliegen.

Die eingangs genannte EP 0 681 759 B1 zeigt eine solche Schaltungsanordnung zum spannungsentlasteten Schalten. Der dort beschriebene Halbleiterschalter ist als feldeffektgesteuerter Leistungstransistor - beispielsweise als MOSFET oder als JFET - ausgebildet. Der Vorteil solcher Leistungsschalter besteht darin, dass sie als unipolare Bauelemente nahezu keine Überschwemmungsladung aufweisen, die verlustbehaftet ausgeräumt werden müssen. Die Schaltverluste von feldeffektgesteuerten Leistungstransistoren sind daher sehr gering. Der große Nachteil solcher Halbleiterbauelemente ist jedoch deren hoher Spannungsabfall im Durchlassbetrieb und die damit einhergehende sehr hohe Verlustleistung während der "Ein-Phase", die sehr viel höher ist als bei bipolar ausgebildeten Halbleiterschaltern. Diese Verlustleistung kommt insbesondere bei den für solche Schaltungen erforderlichen hohen Sperrspannungen - die typischerweise größer als 800 V sind - zum Tragen. Behoben werden könnte dieses Problem dadurch, dass eine größere Chipfläche für den Halbleiterschalter zur Verfügung gestellt wird. Dies kommt jedoch in den meisten Fällen schon allein aus wirtschaftlichen Gründen nicht in Betracht.

Daher sind die genannten unipolaren, durch Feldeffekt steuerbaren Leistungstransistoren für Schaltungsanwendungen, die für sehr hohe Sperrspannungen ausgelegt sein müssen, nur bedingt oder gar nicht geeignet.

Ausgehend von diesem Stand der Technik liegt der vorliegenden Erfindung daher die Aufgabe zugrunde, eine Schaltungsanordnung zum spannungsentlasteten Schalten anzugeben, dessen Leistungsschalter für Hochspannungsanwendungen hinsichtlich der Schaltbedingungen optimiert ist. Ferner soll die Schaltungsanordnung und somit der Leistungsschalter insbesondere auch bei erhöhten Temperaturen stabil, dass heißt mit möglichst unveränderter Verlustleistung, betrieben werden können.

Erfindungsgemäß wird diese Aufgabe durch eine Schaltungsanordnung mit den Merkmalen des Patentanspruchs 1 sowie zwei Verfahren mit den Merkmalen der Patentansprüche 18 und 19 gelöst.

Demgemäss ist eine gattungsgemäße Schaltungsanordnung zum entlasteten Schalten vorgesehen, die dadurch gekennzeichnet ist, dass der Leistungsschalter in einem Halbleiterkörper angeordnet ist,

- mit mindestens einer Innenzone des ersten Leitungstyps,
- mit mindestens einer an die Innenzone eingebetteten und an eine erste Oberfläche des Halbleiterkörpers angrenzenden Basiszone des zweiten Leitungstyps,
- mit mindestens einer in jede Basiszone angeordnete Emitterzone des ersten Leitungstyps,
- mit mindestens einer an die Innenzone angrenzenden Feldstoppzone des ersten Leitungstyps, die eine höhere Dotierungskonzentration als die Innenzone aufweist, und
- mit mindestens einer an die Feldstoppzone angrenzenden Kollektorzone des zweiten Leitungstyps.

Der erfindungsgemäße Leistungsschalter für eine spannungsentlastete Schaltungsanordnung zeichnet sich durch eine vertikale Optimierung dessen Halbleiterstruktur aus. Die Sperrfähigkeit des Leistungsschalter wird durch zwei unterschiedlich dotierte Schichten gewährleistet, das heißt einer niedrig dotierten Innenzone und einer im Vergleich dazu sehr hoch dotierten, jedoch dünnen Feldstoppzone desselben Leitungstyps. Im eingeschalteten Zustand werden sowohl die Innenzone als auch die Feldstoppzone durch ein Elektron-Loch-Plasma überschwemmt. Durch geeignete Wahl des Dotierungsniveaus der Innenzone kann erreicht werden, dass die Überschwemmungsladung schon bei niedrigen Spannungen ausgeräumt wird. Dies führt dazu, dass der Tailstrom des Leistungsschalters bei einer durch das Bauelement vorgegebenen Spannung nahezu auf Null reduziert wird.

Vorteilhafterweise weist der Leistungsschalter (nahezu) keine Mittel zur Absenkung der ambipolaren Ladungsträger-Lebensdauer (engl.: life-time-killing) auf. Unter ambipolarer Ladungsträger-Lebensdauer ist zu verstehen, dass die Rekombination ausschließlich zwischen Löchern und Elektronen, also nicht unter Mitwirkung von Störstellen, stattfindet. Zu diesem Zweck ist die Innenzone und die Feldstoppzone derart ausgestaltet, dass dort die ambipolare Ladungsträgerlebensdauer der eines ungestörten Halbleiterkörpers entspricht. Ein ungestörter Halbleiterkörper liegt vor, wenn der Halbleiterkörper noch nicht behandelt wurde und somit (nahezu) keine Rekombinationszentren im Halbleiterkörper vorhanden sind.

Vorteilhafterweise beträgt die ambipolare Ladungsträgerlebensdauer zumindest 5 μsec. Typischerweise beträgt sie etwa 70 μsec, da das Halbleiterbauelement dann eine verbesserte Leitfähigkeit besitzt. Bekannte Leistungsschalter für die genannten Anwendungen weisen eine sehr viel kürzere ambipolare Ladungsträgerlebensdauer von etwa 200-300 nsec auf. Dies hat bei solchen Leistungsschalter den Nachteil, dass die Plasmakonzentration als Funktion der Temperatur stark variiert.

Halbleiterbauelemente nach dem Stand der Technik, insbesondere sogenannte Punch-Trough-IGBTs (PT-IGBTs), benötigen zur Reduktion der Schaltverluste eine starke Absenkung der ambipolaren Trägerlebensdauer. Die Absenkung wird bei steigender Temperatur infolge der Reduktion des Einfangsquerschnitts wesentlich weniger effektiv. Daraus resultiert ein Anstieg der Plasmakonzentration als Funktion der Temperatur und beim Abschalten, aufgrund der wesentlich größeres auszuräumenden Ladungsmenge, damit ein Anstieg der Abschaltverluste.

Die Schichtdicke der Feldstoppzone ist erfindungsgemäß kleiner oder gleich 30 μm. Besonders vorteilhaft ist es wenn die Schichtdicke der Feldstoppzone 10 - 20 μm beträgt. Die Schichtdicke der Kollektorzone ist typischerweise kleiner oder gleich 5 μm, vorteilhafterweise kleiner oder gleich 1 μm. Bei bekannten Leistungsschaltern dient diese Schicht unter anderem der Stabilität des Halbleiterkörpers und weist von daher eine Schichtdicke im Bereich von größer als 200 μm auf. Bei der vorliegenden Erfindung dient die Kollektorzone nicht der Stabilität des Halbleiterkörpers und kann entsprechend dünn ausgebildet sein.

Besonders vorteilhaft ist es, wenn als Leistungsschalter ein sogenannter Feldstopp-IGBT verwendet wird, da er die Vorteile von PT- und NPT-IGBTs miteinander vereinigt. Durch den Verzicht auf Lebensdauereinstellung ist bei einer Erhöhung der Temperatur keine kritische Temperatur zu beobachten, ab der die Überschwemmungsladung und damit die Schaltverluste stark zunehmen und ab der das Bauelement thermisch instabil wird, was im Extremfall zur Zerstörung des Halbleiterschalters führen könnte. Durch den Verzicht auf Lebensdauereinstellung wird der Temperaturkoeffizient der Durchlassspannung positiv, d.h. bei Parallelschaltung von mehreren gleichartigen Leistungsschaltern, wie dies beispielsweise bei Brückenschaltungen der Fall ist, nimmt der jeweils wärmste Leistungsschalter vorteilhafterweise den geringsten Strom auf. Die Erfindung ist jedoch auch sehr vorteilhaft anwendbar bei einem als Punch-Through-IGBT ausgebildeten Leistungsschalter, wenn gleich sie bei Feldstopp-IGBT effektiver und vorteilhafter ist.

Ein besonderer Vorteil der vorliegenden Schaltungsanordnung liegt darin, dass sie im Temperaturbereich von -40°C bis 150°C nahezu keine Temperaturabhängigkeit der schaltbedingten Leistungsverluste aufweist. Die Verluste steigen hier lediglich um ca. 50-80% zwischen den tiefen (-40°C) und den hohen (150°C) Temperaturen.

In einer ersten vorteilhaften Ausgestaltung der Erfindung wirkt der Schwingkreis im ausgeschalteten Zustand wie ein (nahezu) idealer, d.h. verlustfreier Parallelschwingkreis. Die Induktivität $L_R$ und der Kondensator $C_K$ sind hier parallel zueinander angeordnet, während die Laststrecke des Leistungsschalters und der Schwingkreis in Reihe geschaltet sind und zwischen dem ersten und zweiten Versorgungspotential angeordnet sind. Die Elemente des Parallelschwingkreises $L_R$, $C_K$ erfüllen folgende allgemein bekannten Gleichung:

$$\tfrac{1}{2}\, C_K\, U_{CK,max}{}^2 = \tfrac{1}{2}\, L_R\, I_{LR,max}{}^2$$

wobei $U_{CK,max}$ die am sogenannten Kommutierkondensator $C_K$ abfallende maximale Spannung und $I_{LR,max}$ der durch die sogenannte Resonanzinduktivität $L_R$ fließende maximale Strom ist. Im Betrieb der Schaltungsanordnung wird die in der Resonanzinduktivität $L_R$ gespeicherte Energie bei maximalem Spulenstrom $I_{LR,max}$ sukzessive an den Kommutierkondensator $C_K$ abgegeben, bis der maximale Spulenstrom auf Null abgefallen ist und am Kommutierkondensator $C_K$ die maximale Spannung $U_{CK,max}$ anliegt. Anschließend wird der Kommutierkondensator $C_K$ in umgekehrter Richtung, d.h. in Richtung der Resonanzinduktivität $L_R$, die ihrerseits die Energie speichert, wieder entladen.

In einer typischen Ausgestaltung des Parallelschwingkreises weist der Kondensator eine sehr viel geringere Kapazität auf als der Lastkondensator.

In einer zweiten vorteilhaften Ausgestaltung der Erfindung ist der Schwingkreis als (nahezu) idealer Reihenschwingkreis ausgebildet. Die Induktivität und der Kondensator, der parallel zur Laststrecke des Leistungsschalters geschaltet ist, sind hier in Reihe zueinander und zwischen dem ersten und zweiten Versorgungspotential angeordnet.

Die Erfindung findet besonders vorteilhaft Anwendung bei solchen Schaltungsanordnungen, die als Schaltnetzteil, als getaktete Stromversorgung, als Spannungsregler, als Lampenansteuerungsschalter oder dergleichen ausgebildet sind.

Der Schwingkreis weist typischerweise zwei Betriebsphasen auf:

- In der ersten Betriebsphase wird der Leistungsschalter gerade eingeschaltet und befindet sich anschließend im eingeschalteten Zustand. Zu Beginn dieser Phase leitet der Leistungsschalter noch nicht, wobei auch der Diodenstrom Null ist. Über ein Ansteuersignal kann nun der Leistungsschalter in den eingeschalteten Zustand gesteuert werden. Während der zweiten Betriebsphase ist der Leistungsschalter ausgeschaltet und der Schwingkreis schwingt frei. Die Frequenz des Schwingkreises ist hier typischerweise durch die Elemente des Schwingkreises vorgegeben.

Vorteilhafterweise ist der Einschaltzeitpunkt des Leistungsschalters und damit der Beginn der ersten Betriebsphase frei wählbar. Besonders vorteilhaft ist es ferner, wenn die Pulsweite der Schaltungsanordnung über die Dauer der ersten Betriebsphase einstellbar ist. Beispielsweise kann durch den Zeitpunkt, bei dem der Leistungsschalter ausgeschaltet wird, die Pulsweite mehr oder weniger moduliert werden. Vorteilhafterweise wird der Ausschaltzeitpunkt und damit die Pulsweite durch die Ansteuerschaltung vorgegeben und kann dort programmiert sein.

Besonders vorteilhaft ist es, wenn das Kollektorpotential bzw. die über dem Leistungsschalter abfallende Spannung während der ersten Phase nahezu Null ist - also der Durchlassspannung des Leistungsschalters entspricht - und während der zweiten Phase annähern sinusförmig ausgebildet ist. In diesem Fall sind die Dämpfung und somit auch die Verluste des Schwingkreises besonders gering.

Weitere vorteilhafte Ausgestaltungen und Weiterbildungen der Erfindung sind den Unteransprüchen sowie der Beschreibung unter Bezugnahme auf die Zeichnung entnehmbar.

Die Erfindung wird nachfolgend anhand der in den Figuren der Zeichnung angegebenen Ausführungsbeispiele näher erläutert. Es zeigt dabei:

Figur 1     ein erstes Ausführungsbeispiel einer erfindungsgemäßen Schaltungsanordnung, die als Lampenansteuerschaltung mit Dämpfungselement ausgebildet ist;

Figur 2     ein zweites Ausführungsbeispiel einer erfindungsgemäßen Schaltungsanordnung, die als Schaltnetzteil mit induktiver Kopplung ausgebildet ist;

Figur 3     der zeitliche Verlauf verschiedener Ströme und Spannungen bei einer erfindungsgemäßen Schaltungsanordnung entsprechend der Figuren 1 und 2;

Figur 4     ein drittes Ausführungsbeispiel einer erfindungsgemäßen Schaltungsanordnung;

Figur 5     in einem Teilschnitt den Aufbau eines optimierten Leistungsschalters, der hier als Feldstopp-IGBT ausgebildet ist;

Figur 6     in einem Diagramm die Temperaturabhängigkeit der Schaltverluste bei einem Feldstopp-IGBT (a) und bei einem PT-IGBT (b);

Figur 7 in einem Diagramm die Abhängigkeit des Strom- und Spannungsverlaufs beim Aus-schalten eines Leistungsschalters am Bei-spiel eines Feldstopp-IGBTs (a) und eines NPT-IGBTs (b) unter spannungsentlasteten Bedingungen.

In allen Figuren der Zeichnung sind gleiche bzw. funktionsgleiche Elemente - sofern nichts anderes angegeben ist - mit gleichen Bezugszeichen versehen worden.

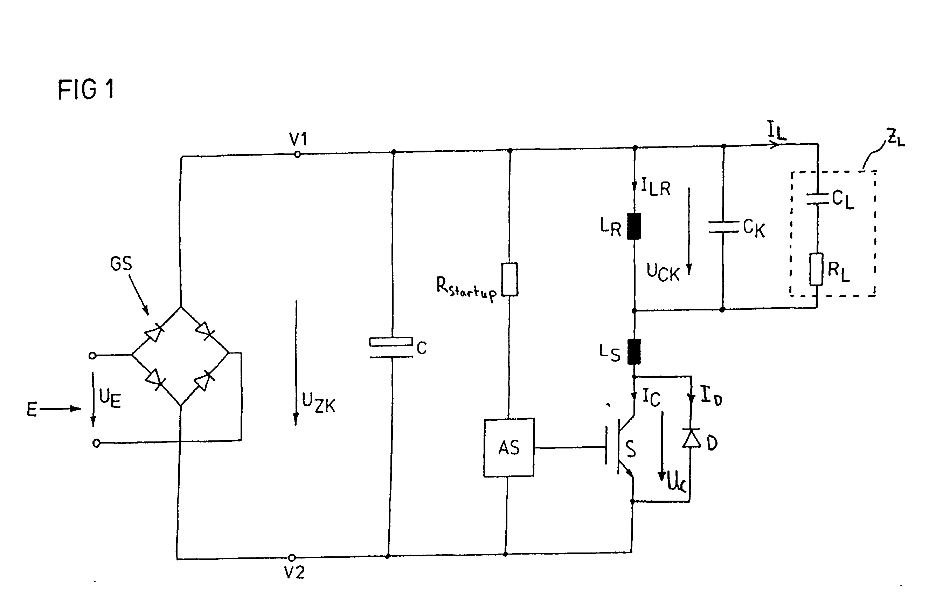

Figur 1 zeigt ein erstes Ausführungsbeispiel einer erfindungsgemäßen Schaltungsanordnung. Die Schaltungsanordnung in Figur 1 zeigt eine Lampenansteuerung mit Dämpfelement, wobei das Dämpfelement als Parallelschwingkreis ausgebildet ist.

Die Schaltung weist einen Eingang E auf, an dem eine Eingangsspannung $U_E$, beispielsweise eine Netzspannung, anliegt. Die Eingangsspannung $U_E$ wird einer Gleichrichterschaltung GS zugeführt, die an Ihrem Ausgang zwei gleichgerichtete Versorgungspotentiale V1, V2 und damit eine Zwischenkreisspannung $U_{ZK} =$ V2-V1 bereitstellt. Zwischen diesen Versorgungspotentialen V1, V2 ist ein im vorliegenden Ausführungsbei-spiel als Elektrolytkondensator ausgebildeter Ladekon-densator C geschaltet, der den Zwischenkreis der Schaltungsanordnung bildet.

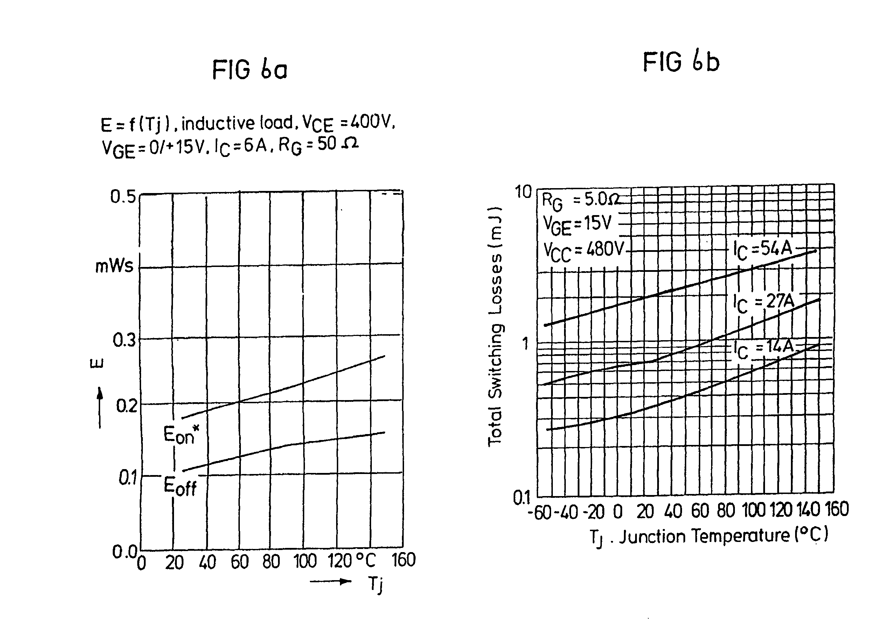

Parallel zum Elektrolytkondensator C und ebenfalls zwischen den Potentialen V1, V2 ist ein steu-erbarer Leistungsschalter S angeordnet. Erfindungsge-mäß ist der steuerbare Leistungsschalter als IGBT (Insulated Gate Bipolar Transistor) ausgebildet. Der Aufbau und die Funktionsweise des IGBTs wird nachfolgend noch ausführlich anhand von Figur 6 beschrieben. Parallel zur Laststrecke des Leistungsschalters S, d. h. zwischen dessen Kollektor-Emitter-Anschluss, ist eine Freilaufdiode D vorgesehen. Der IGBT wird von einer Ansteuerschaltung AS, die ebenfalls zwischen den Potentialen V1, V2 geschaltet ist, angesteuert. Zwischen der Ansteuerschaltung AS und dem Anschluss für das Potential V1 ist typischerweise ein sogenannter Start-up-Widerstand $R_{STAR-UP}$ angeordnet. Der Start-Up-Widerstand $R_{START-UP}$ versorgt die Ansteuerschaltung AS, die im ausgeschalteten Zustand bzw. im Power-down-Modus keine Energie aufnimmt, beim Einschalten sofort mit der erforderlichen elektrischen Energie. Alternativ wäre hier auch denkbar, die Ansteuerschaltung AS mit einer Stromquelle, Ansteuerschaltung AS mit einer Stromquelle, beispielsweise einem MOS-Transistor, zu koppeln oder über einen Niedervoltabgriff zwischen Schalter S und Induktivität $L_R$ mit Energie zu versorgen.

In Reihe zur Laststrecke des Leistungsschalters S ist ein idealer, d.h. möglichst verlustfreier Schwingkreis $L_R$, $C_K$ geschaltet. Der Schwingkreis $L_R$, $C_K$ besteht aus der Parallelschaltung einer Induktivität $L_R$ und einem Kondensator $C_K$ und dient dem Zweck, bei einem Ausschalten der Schaltungsanordnung die in der Schwingkreisinduktivität $L_R$ gespeicherte Energie sukzessive an den Schwingkreiskondensator $C_K$ abzugeben, wodurch die gespeicherte Energie verbraucht wird.

Eine reale Schaltungsanordnung weist darüber hinaus typischerweise eine parasitäre Streuinduktivität $L_S$ auf, die zwischen der Laststrecke des Leistungsschalters S und dem Schwingkreis LR, $C_K$ angeordnet ist und die es möglichst - beispielsweise durch kurze Verbindungsleitungen - zu vermeiden gilt.

Am Ausgang der Schaltungsanordnung, das heißt parallel zum Schwingkreis $L_R$, $C_K$, ist ein Verbraucher $Z_L$ vorgesehen. Der Verbraucher $Z_L$ besteht im vorliegenden Ausführungsbeispiel aus einem in Reihe geschalteten Lastkondensator $C_L$ und einem Lastwiderstand $R_L$. Der Lastwiderstand $R_L$ sowie der Lastkondensator $C_L$ symbolisieren die Verluste eines Verbrauchers, beispielsweise einer Lampe. Typischerweise ist die Kapazität des Lastkondensators $C_L$ sehr viel größer als die des Schwingkreiskondensators $C_K$, was bei der nach-folgend beschriebenen Dimensionierung des Schwing-kreiskondensators $C_K$ berücksichtigt werden muss.

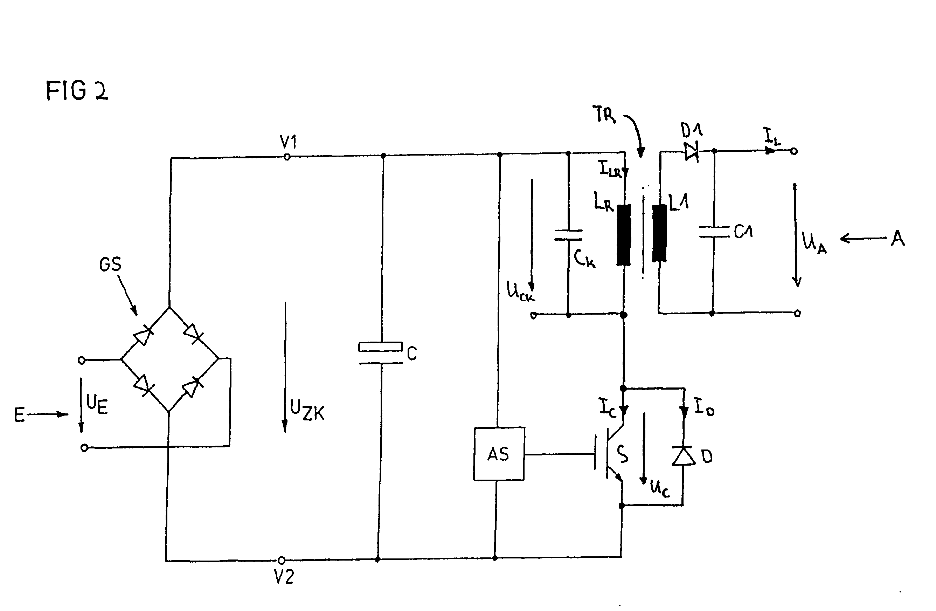

Figur 2 zeigt ein zweites Ausführungsbeispiel einer erfindungsgemäßen Schaltungsanordnung, die hier als Schaltnetzteil mit induktiver Kopplung ausgebildet ist. Die Schaltungsanordnung in Figur 2 ist gegenüber der in Figur 1 in vereinfachter Form dargestellt worden, das heißt auf die Darstellung der parasitären Streuinduktivität $L_S$, des Verbrauchers $Z_L$ sowie des Start-up-Widerstandes $R_{START-UP}$ wurde hier verzichtet. Die Induktivität $L_R$ des Parallelschwingkreises bildet hier gleichsam die primärseitige Induktivität eines Transformators TR. Der Transformator TR weist darüber hinaus eine sekundärseitige Induktivität L1 sowie eine dazu in Reihe geschaltete Diode D1 auf. Parallel zu der Reihenschaltung aus Diode D1 und Induktivität L1 und somit parallel zum Ausgang A der Schaltungsanordnung, an der die Ausgangsspannung $U_A$ abgreifbar ist, ist ein Pufferkondensator C1 vorgesehen.

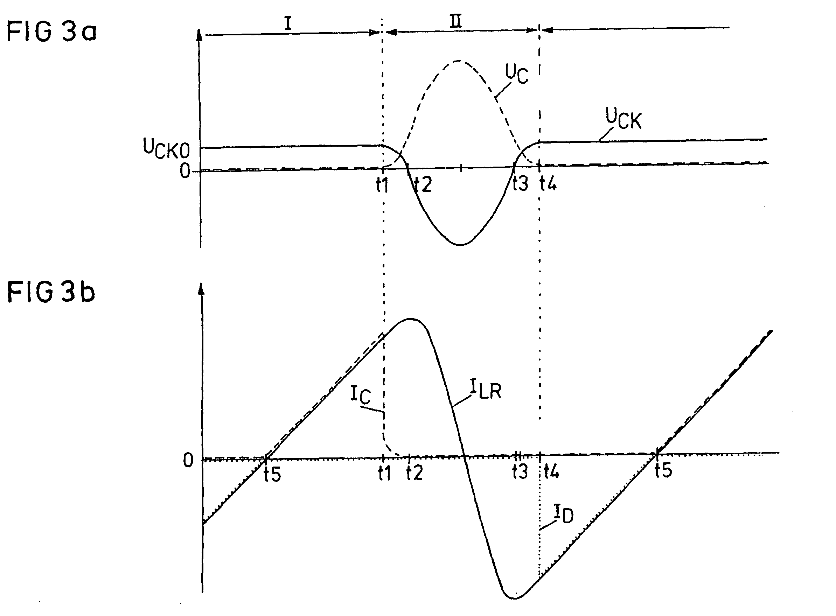

Anhand von Figur 3 wird nachfolgend auf die Funktionsweise der erfindungsgemäßen Schaltungsanordnungen entsprechend der Figuren 1 und 2 näher eingegangen. Dabei wird auf die prinzipielle Arbeitsweise einer Lampenansteuerschaltung bzw. eines Schaltnetzteiles verzichtet, da dies als für den Fachmann allgemein bekannt vorausgesetzt wird. Es wird lediglich auf das Zusammenwirken der Ströme und Spannungen des Parallelschwingkreises sowie des Leistungsschalters S und diesem parallel geschalteter Diode D eingegangen.

In Figur 3(a) ist der zeitliche Spannungsverlauf der über der Induktivität $L_R$ abfallenden Spannung $U_{CK}$ (durchgezogene Linie) und der über dem Schalter S abfallenden Spannung $U_C$ (strichlierte Linie) dargestellt. In Figur 3(b) ist der zeitliche Verlauf der Ströme dargestellt, wobei hier die durchgezogene Kurve den Strom $I_{LR}$ durch die Induktivität $L_R$, die strichlierte Kurve den Strom $I_C$ am Kollektor des Leistungsschalters S und die punktierte Linie den Diodenstrom $I_D$ durch die Diode D bezeichnet.

Die Strom- und Spannungsverläufe lassen sich grob in zwei unterschiedliche Phasen I, II unterteilen, wobei mit I die Einschaltphase des Leistungsschalters S bezeichnet ist, bei der dieser gerade eingeschaltet wird und anschließend im durchgeschalteten Zustand befindlich ist. Mit II ist die Phase bezeichnet, bei der der Leistungsschalter S ausgeschaltet ist und somit der Schwingkreis frei schwingen kann.

In Phase I steigt der Induktivitätsstrom $I_{LR}$ linear stetig an. Die Spulenspannung $U_{CK}$ ist hier auf einem hohen Niveau ($U_{CK,0}$), während die am Leistungsschalter S abfallende Spannung $U_C$ nahezu Null ist. Wird zu einem Zeitpunkt t1 der Leistungsschalter S abgeschaltet, dann steigt die am Leistungsschalter abfallende Spannung $U_C$ langsam an, während gleichermaßen die Spulenspannung $U_{CK}$ abfällt. Mit dem Abschaltvorgang bricht der Kollektorstrom $I_C$ durch den Leistungsschalter S auf Null zusammen, während der Spulenstrom $I_{LR}$ noch eine Zeit lang, jedoch zunehmend flacher verlaufend ansteigt. Dieses sogenannte Überschwingen des Spulenstromes $I_{LR}$ wird durch die Parallelschaltung der Induktivität $L_R$ und des Kondensators $C_K$ verursacht. Beim Abschalten entlädt sich zunächst der Kondensator $C_K$ über die Induktivität $L_R$, was einen Spulenstrom $I_{LR}$ und somit ein Überschwingen bewirkt. Realerweise verringert sich der Kollektorstrom $I_C$ nicht sofort auf Null, sondern verläuft sanft gegen Null. Man spricht hier von einem Tailstrom, der durch einen durch Ausräumvorgänge verursachten Stromfluss nach dem Abschalten des Leistungsschalters S verursacht wird.

Zum Zeitpunkt t2 wird die Spulenspannung $U_{CK}$ negativ und verläuft idealerweise in einer negativen Halbwelle einer näherungsweisen Sinuskurve, die zum Zeitpunkt t3 wieder positiv wird. Zwischen den Zeitpunkten t2 und t3 sinkt der Spulenstrom $I_{LR}$ ab und wird sogar negativ. In dem gleichen Zeitabschnitt steigt die am Leistungsschalter S abfallende Spannung $U_C$ an, wobei der Spannungsverlauf idealerweise dem einer positiven Sinushalbwelle gleicht. In der Realität wird jedoch die Sinuskurve mit einer Exponentialfunktion überlagert, da der Verbraucher typischerweise eine nicht vernachlässigbare Dämpfung aufweist. Insbesondere Verbraucher, die als Lampen, insbesondere Gasentladungslampen ausgebildet sind, weisen eine sehr hohe Dämpfung auf, wodurch die sinusartige Kurve stark verzerrt wird.

Ab dem Zeitpunkt t4 kann die Gatekapazität des Leistungsschalters S langsam umgeladen werden. Zum Zeitpunkt t4 erreicht die Spulenspannung die anliegende Zwischenkreisspannung. Die Spannung über dem Schalter ist Null. Das freie Schwingen des Schwingkreises wird zu diesem Zeitpunkt t4 beendet, da die Diode bereits bei einer kleinen Spannung leitend wird und den Spulenstrom übernimmt. Der Spulenstrom $I_{LR}$ steigt nun wieder linear an. Der Diodenstrom $I_D$, der bislang Null war, steigt zum Zeitpunkt t4 betragsmäßig abrupt an und wird stark negativ. Der Diodenstrom $I_D$ übernimmt ab dem Zeitpunkt t4 zunächst den gesamten Spulenstrom $I_{LR}$. Der Spulenstrom $I_{LR}$ und der Reversstrom $I_D$ durch die Diode D sind zu diesem Zeitpunkt noch negativ, da der Leistungsschalter S noch nicht durchgeschaltet ist. Zum Zeitpunkt t5 wechselt der Spulenstrom sein Vorzeichen und der Leistungsschalter S ist bereits eingeschaltet. Der Diodenstrom $I_D$ wird gleichzeitig zu Null und der Kollektorstrom $I_C$ durch den Leistungsschalter S übernimmt den gesamten Spulenstrom $I_{LR}$ und steigt stetig linear bis zu dem Zeitpunkt, bei dem der Leistungsschalter S wieder abgeschaltet wird.

Die Einschaltphase I unterteilt sich somit in einen ersten Schaltbereich Ia, während der die Diode D leitet, und einen zweiten Schaltbereich IIa, bei der der Leistungsschalter S leitet. Der tatsächliche Einschaltzeitpunkt des Leistungsschalters S ist dabei innerhalb des Zeitintervalles t5-t4 frei wählbar. Wesentlich ist, dass zum Einschaltzeitpunkt sowie die Spannung am Leistungsschalter S Null betragen sollte. Der Einschaltzeitpunkt ist somit im Zeitintervall t5-t4 nahezu frei wählbar. Um jedoch den Leistungsschalter S definiert einschalten zu können, sollte der Diodenstrom $I_D$ also möglichst klein sein, d.h. idealerweise ist der Einschaltzeitpunkt t5 gleich t4. Jedoch sollte das Intervall t5-t4 gleichermaßen ausreichend groß sein, um ein definiertes Einschalten des Leistungsschalter S jederzeit zu gewährleisten.

Der Ausschaltzeitpunkt t1 bestimmt die Größe des Reversstromes $I_D$ der Diode D und hängt stark von der Dimensionierung des Verbrauchers ab. Während des freien Schwingens des Schwingkreises, das heißt während dem Zeitintervall t4-t1, ist die Frequenz durch den Schwingkreis selbst vorgegeben.

Die Pulsweite der Schaltungsanordnung ist über die Einschalt- und Ausschaltzeitpunkte t4, t1 einstellbar.

Die Differenz zwischen dem maximalen und minimalen Strom $I_{LR}$ ist ein Maß für die vom Verbraucher verbrauchte Energie.

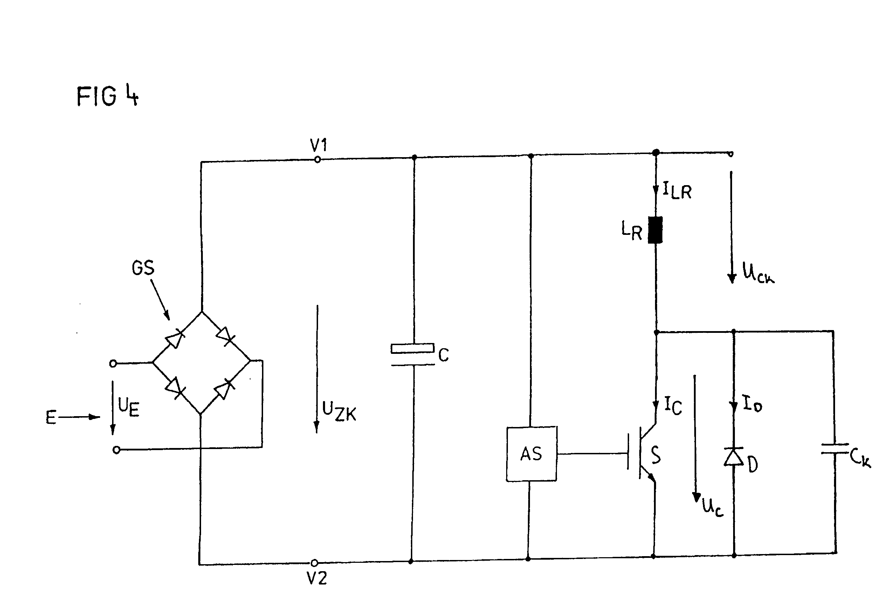

Figur 4 zeigt ein viertes Ausführungsbeispiel einer erfindungsgemäßen Schaltungsanordnung, die als Ansteuerschaltung für einen Fernsehverbraucher ausgebildet ist. In Abwandlung zu den Ausführungsbeispielen entsprechend den Figuren 1 und 2 ist hier der Schwingkreis als Reihenschwingkreis ausgebildet. Der Kondensator $C_K$ ist hier parallel zur Diode D und der Laststrecke des Leistungsschalters S angeordnet. Diese Parallelschaltung ist in Reihe zu der Induktivität $L_R$ angeordnet.

Die Strom-Spannungs-Verläufe einer Schaltungsanordnung entsprechend Figur 4 entsprechen im wesentlichen dem in Figur 3 dargestellten Verläufen. Die Spannung $U_{CK}$ fällt hier an der Induktivität $L_R$ ab. Einziger Unterschied ergibt sich dadurch, dass es nach dem Abschalten des Leistungsschalters S zu keinem Überschwingen des Spulenstromes $I_{LR}$ kommt, da der Kondensator $C_K$ sich nicht mehr über die Induktivität $L_R$ entladen kann. Der Spulenstrom $I_{LR}$ nimmt also sofort, d.h. bereits vom Zeitpunkt t1 an sukzessive ab. Allerdings muss natürlich zunächst der Kondensator C auf die Spannung $U_{CK,\,0}$ aufgeladen werden.

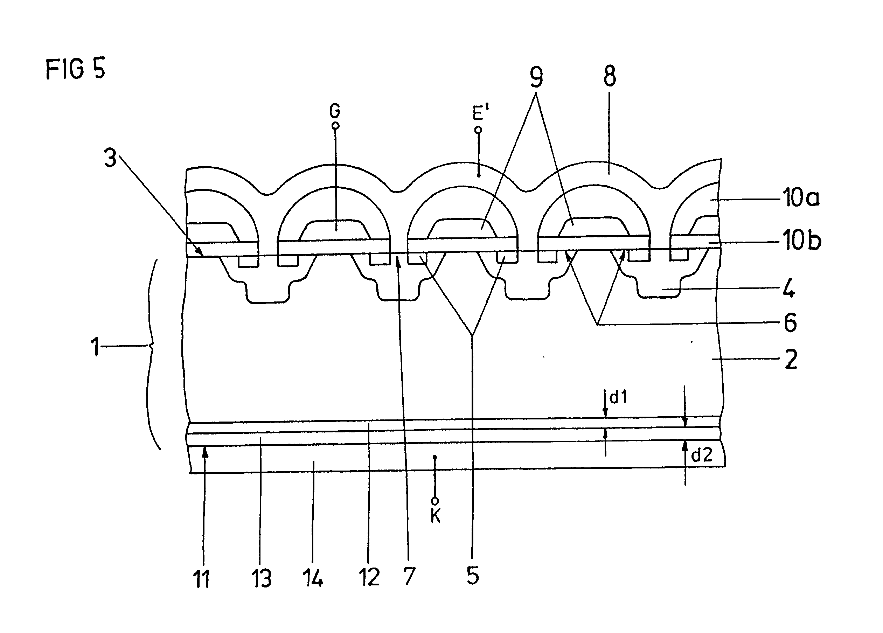

Nachfolgend wird der Aufbau eines erfindungsgemäßen, als IGBT ausgebildeten Leistungsschalters S entsprechend der Figuren 1, 2 und 4 anhand des Teilschnittes in Figur 5 näher beschrieben.

Der in Figur 5 dargestellte IGBT-Leistungsschalter S ist in einem Halbleiterkörper 1 - beispielsweise aus Silizium - angeordnet. Der Halbleiterkörper 1 weist eine n-dotierte Innenzone 2 auf. An der ersten Oberfläche 3 ist eine p⁺-dotierte Basiszone 4 in die Innenzone 2 eingebettet. In jede Basiszone 4 ist wiederum mindestens eine n⁺-dotierte Emitterzone 5 derart eingebettet, dass die Basiszonen 4 an verschiedenen Stellen 6, 7 an die Oberfläche 3 des Halbleiterkörpers 1 treten und in den übrigen Bereichen von den Emitterzonen 5 bedeckt sind. Diese an die Oberfläche 3 tretenden Stellen 6, 7 sind zum einem die Kanalzonen 6 sowie die mit jeweils einer Emitterelektrode 8 verbundenen Kontaktbereiche 7. Ferner ist eine Gate-Elektrode 9 zur Steuerung der Kanalzone 6 vorgesehen, die über ein Oxid 10a gegen die Emitter-Elektrode 8 und die über ein Dielektrikum 10b gegen den Halbleiterkörper 1 im Bereich der Kanalzone 6 beabstandet bzw. isoliert ist. Die Gate-Elektrode 9 ist derart über dem Halbleiterkörper 1 angeordnet, dass zumindest der an die Oberfläche 3 der Basiszone 4 tretende Bereich der Kanalzone 6 von der Gate-Elektrode 9 bedeckt wird.

An der Rückseite des Halbleiterkörpers 1 ist zwischen einer zweiten Oberfläche 11 und der Innenzone 2 zunächst eine großflächig an die Innenzone 2 angrenzende, n-dotierte Feldstoppzone 12 und eine an die Feldstoppzone 12 angrenzende p⁺-dotierte Kollektorzone 13 vorgesehen. Die Kollektorzone 13 ist an der zweiten Oberfläche 11 großflächig mit einer Kollektorelektrode 14 kontaktiert.

In Figur 5 ist somit ein als Feldstopp-IGBT ausgebildetes vertikales Halbleiterbauelement dargestellt, bei dem die Gate-Elektrode 9 mit einem Gate-Anschluss G und die Emitter-Elektrode 8 mit einem Emitter-Anschluss E' an der (Scheiben)Vorderseite 3 des Halbleiterkörpers 1 angeordnet sind und an der (Scheiben)Rückseite 11 die Kollektor-Elektrode 14 mit dem Kollektoranschluss K verbunden ist. Die durch die Kanalzone 6 fließenden Ladungsträger fließen zunächst durch die Innenzone 2 in die Feldstoppzone 12 und Kollektorzone 13 und werden dort von der Kollektorelektrode 14 abgesaugt. Die Kollektorzone 13 dient der Injektion von Minorität-Ladungsträgern in die Innenzone 2 und damit der Erhöhung der Leitfähigkeit im Durchlassbetrieb des Halbleiterbauelementes.

Die Gate-Elektrode 9 ist typischerweise aus hochdotiertem Polysilizium, ließe sich jedoch auch durch eine gängige Metallisierung oder durch ein Silizid realisieren. Die Source-Elektrode 8 und Drain-Elektrode 14 ist als gängige Metallisierung, beispielsweise Aluminium, Kupfer, Gold, etc. ausgebildet. Das Dielektrikum 10b zwischen Gate-Elektrode 9 und Halbleiterkörper 1 sowie das Oxid 10a enthalten typischerweise Siliziumdioxid ($SiO_2$), können jedoch selbstverständlich auch durch ein anderes Material, wie beispielsweise Siliziumnitrid ($Si_3N_4$), oder aus einer Mischung der genannten Materialien ausgebildet sein.

Für das Ausführungsbeispiel der Figur 5 lassen sich selbstverständlich durch Austauschen aller Leitfähigkeitstypen n gegen p sowie durch Variation der Dotierungskonzentrationen weitere Ausführungsbeispiele bereitstellen. Ferner zeigt Figur 5 einen als D-MOS ausgebildeten IGBT, jedoch wäre dieses Halbleiterbauelement auch durch einen V-förmigen einen Trench-IGBT oder dergleichen ersetzbar.

Ein Feldstopp-IGBT entsprechend Figur 5 zeichnet sich gegenüber anderen IGBT-Varianten, wie beispielsweise einem PT-IGBT (Punch-Through-IBGT), dadurch aus, dass die Kollektorzone 13 sowie die Feldstoppzone 12 sehr dünn ausgebildet ist; typischerweise weisen diese Zonen 12, 13 eine Schichtdicke d1, d2 zwischen 100 nm und 30 μm auf. Im Gegensatz dazu ist die Feldstoppzone 12 und Kollektorzone 13 bei einem PT-IGBT deutlich größer als 30 μm. Wesentlich bei der Dimensionierung der Feldstoppzone 12 und Kollektorzone 13 ist in diesem Zusammenhang, das sie eine sehr hohe Dotierungskonzentration aufweisen müssen. Insbesondere sollte die Feldstoppzone 12 eine um einige Größenordnungen höhere Dotierungskonzentration als die Innenzone 2 aufweisen.

Der besondere Vorteil des in Figur 5 gezeigten Feldstopp-IGBTs gegenüber einem herkömmlichen PT-IGBT ist dessen geringerer Emitter-Wirkungsgrad, für den Fall, dass die Kollektorzone 13 die beschriebene Dicke d2 < 5μm aufweist. In diesem Fall ist eine geringe bzw. gar keine Lebensdauerabsenkung erforderlich, wodurch vorteilhafterweise die Feldstoppzone 12 ebenfalls sehr dünn (d1 < 5μm) ausgebildet sein kann. Da diese Lebensdauereinstellung, wie bereits eingangs erwähnt, eine starke Temperaturabhängigkeit aufweist, wird durch die Bereitstellung eines Feldstopp-IGBTs vorteilhafterweise eine geringe bzw. gar keine Temperaturabhängigkeit der Verlustleistung erreicht. Ein Feldstopp-IGBT eignet sich daher besonders gut für die in den Figuren 1, 2 und 4 gezeigten spannungsentlasteten Schaltungen, da sie bei einer sehr hohen Sperrspannung mit sehr geringer Verlustleistung betreibbar sind und die Verlustleistung darüber hinaus auch nahezu keine Temperaturabhängigkeit zeigt.

Der Aufbau eines in Figur 5 dargestellten Feldstopp-IGBTs ist beispielsweise in der DE 197 31 495 C2 beschrieben. Bezüglich weiterer Einzelheiten, Merkmale, deren Vorteile und Wirkungsweise eines Feldstopp-IGBTs wird ausdrücklich auf das deutsche Patent DE 197 31 495 C2 verwiesen und vollinhaltlich Bezug genommen ("Incorporated by Reference").

Für eine Schaltungsanordnung zum entlasteten, d.h. spannungslosen Schalten entsprechend den Figuren 1, 2 und 4 könnten neben den beschriebenen Feldstopp-IGBTs selbstverständlich auch PT-IGBTs eingesetzt werden. PT-IBGTs eignen sich insbesondere deshalb für spannungsentlastete Schaltungen, da sie auch bei sehr hohen Spannungen eine deutlich geringere Verlustleistungen aufweisen als die eingangs genannten MOSFETs. Das Problem bei PT-IBGTs ist jedoch deren hohe Emitter-Effizienz und der damit verbundenen Plasma-Überschwemmung in der Innenzone. Zur Verringerung der Ladungsträgerüberschwemmung ist eine Reduzierung der Ladungsträgerlebensdauer erforderlich. Diese Verringerung der Ladungsträgerlebensdauer wird durch geeignete Dimensionierung der Feldstoppzone, insbesondere durch deren Dotierungskonzentration sowie Schichtdicke, eingestellt. Allerdings ist die Reduzierung der Ladungsträgerlebensdauer in der Feldstoppzone stark temperaturabhängig, wodurch die schaltbedingte Verlustleistung bei PT-IGBTs bei zunehmender Temperatur stark ansteigt.

Als Leistungsschalter S wäre schließlich auch ein sogenannter NPT-IGBT (Non-Punch-Through-IGBT) denkbar. Der Aufbau eines NPT-IGBTs sowie eines PT-IGBTs ist ausführlich in Jens Peer Stengl, Jenö Tihanyi, "Leistungs-MOS-FET-Praxis", Pflaum Verlag, München, 1992, beschrieben. Ein solcher NPT-IGBT verzichtet gänzlich auf Lebensdauereinstellungen und hat demzufolge eine sehr geringe Temperaturabhängigkeit der schaltbedingten Verlustleistung. Die Überschwemmungsladung wird hier wie beim FS-IGBT durch die zwischen Emitter und Kollektor anliegende Spannung ausgeräumt. Ein NPT-IGBT eignet sich daher nur bedingt für spannungsentlastete Schaltbedingungen.

Durch die bei einem PT-IGBT und FS-IGBT abweichende vertikale Struktur mit einer dickeren Innenzone und dem vollständigen Verzicht auf eine Feldstoppzone 12 ergibt sich eine Feldverteilung im Schalter derart, dass erst bei Spannungen, die im Bereich der Durchbruchsspannung liegen, die Überschwemmungsladung ausgeräumt wird. Bei PT- und FS-IGBTs ist der größte Anteil der Plasmaladung ausgeräumt, sobald durch die anliegende Spannung des elektrischen Feldes die Feldstoppzone 11 durchbricht. Dies ist typischerweise bei Spannungen unterhalb der Durchbruchsspannung der Fall. Bei PT- und FS-IGBT erreicht das elektrische Feld aufgrund der n-dotierten Schicht vor der Rückseite bereits bei niedrigen Kollektor-Emitter-Spannungen die Feldstoppzone. Das Plasma wird somit bereits bei niedriger Spannung ausgeräumt sodass es bei hohen Spannungen zu keinem Stromfluss kommt. Derartige Halbleiterbauelemente zeichnen sich durch besonders niedrige Verluste beim spannungsentlasteten Schalten aus.

Bei NPT-IGBTs hingegen erreicht das elektrische Feld selbst bei einer spezifizierten Durchbruchspannung nicht den Emitterbereich an der Rückseite des Halbleiterkörpers, so dass es auch bei hohen Spannungen zu einem Tailstrom kommt. Die Verluste beim spannungsentlasteten Schalten sind daher gegenüber den vorstehend beschriebenen Halbleiterbauelementen deutlich höher.

Figur 6 zeigt in einem Diagramm die Temperaturabhängigkeit der Schaltverluste bei einem Feldstopp-IGBT (a) und einem PT-IGBT (b). Das Diagramm in Figur 6(a) zeigt, dass die Einschaltverlustleistung $E_{ON}$ und die Ausschaltverlustleistung $E_{OFF}$ im Temperaturbereich $T_J = 20°-140°C$ um jeweils etwa 50% ansteigen. Im Gegensatz dazu steigt die schaltungsbedingte Verlustleistung bei einem PT-IGBT gemäß dem Diagramm in Figur 6(b), bei dem die Messwerte in logarithmischer Form aufgetragen sind, um etwa das Dreifache im Temperaturbereich zwischen 20°-140° C.

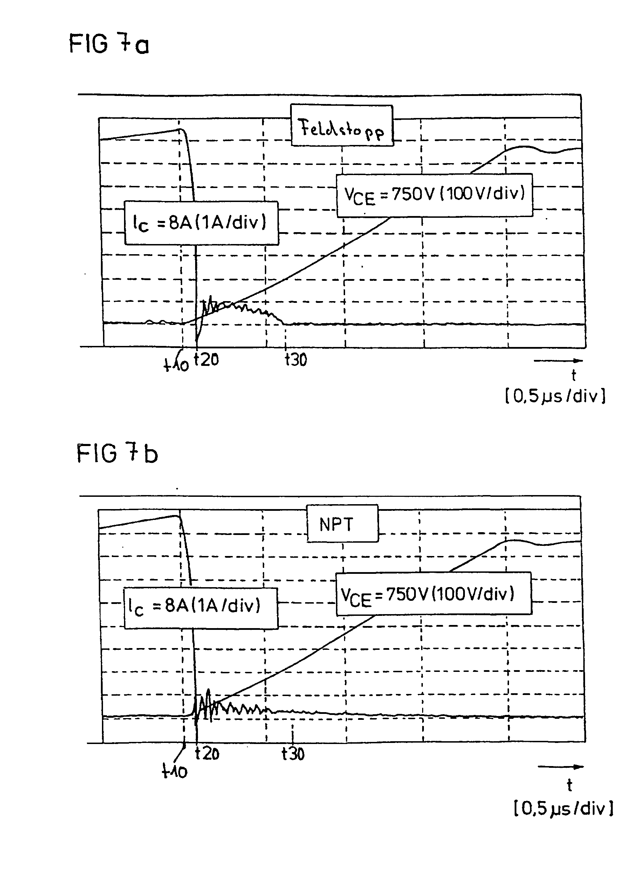

Figur 7 zeigt in einem Diagramm die Abhängigkeit des Strom- und Spannungsverlaufs beim Ausschalten eines Leistungsschalters am Beispiel eines Feldstopp-IGBTs (a) und eines NPT-IGBTs (b) unter entlasteten Bedingungen. Bei dem Feldstopp-IGBT und bei dem NPT-IGBT steigt zum Zeitpunkt t10 beim Ausschalten die Kollektor-Emitterspannung $U_C$ linear an. Gleichermaßen sinkt der Kollektorstrom $I_C$ ab, bis er zum Zeitpunkt t20 nahezu auf Null abgesunken ist. Anschließend steigt der Kollektorstrom $I_C$ auf Grund von Kondensatorentladungen (Tailstrom) wieder leicht an, um schließlich wieder gegen Null zu gehen. Im Falle eines Feldstopp-IGBTs erreicht der Kollektorstrom $I_C$ bereits sehr schnell, dass heißt zum Zeitpunkt t30, diesen stromlosen Zustand. Der Tailstrom ist hier sehr kurz und endet typisch bei etwa 200 V. Im Gegensatz dazu weist der Kollektorstrom $I_C$ des NPT-IGBTs (Figur 7(b)) zum Zeitpunkt t30 noch einen deutlich höheren - etwa 10 - 20 - fach höheren - Stromwert auf, was einer deutlich höheren Verlustleistung entspricht. Der Tailstrom dauert hier sehr lange und reicht bis zur maximalen Spannung.

Der PT-IGBT weist zwar einen Strom- und Spannungsverlauf ähnlich wie der Feldstopp-IGBT auf, jedoch ist dieser stark temperaturabhängig.

Grundsätzlich kann also festgestellt werden, dass PT-IGBTs aufgrund der Tatsache, dass deren schaltbedingten Verlustleistungen sehr viel stärker von der Temperatur abhängen als bei Feldstopp-IGBTs, sich besonders für solche Anwendungen eignen, bei denen die Halbleiterbauelemente zwar einer hohen Spannung, jedoch nur geringen Temperaturschwankungen ausgesetzt sind. Im Gegensatz dazu sind Feldstopp-IGBTs, die sämtliche Vorteile der PT-IGBTs und NPT-IGBTs aufweisen und darüber hinaus nahezu keine Temperaturabhängigkeit der schaltbedingten Verlustleistung zeigen, somit die optimale Lösung für den erfindungsgemäßen Einsatz als Leistungsschalter bei einer Schaltungsanordnung gemäß den Figuren 1, 2 und 4.

Die Erfindung eignet sich insbesondere für solche Schaltungen, bei denen ein spannungsfreies Schalten vorteilhaft ist, wie zum Beispiel Schaltnetzteile, Halb- oder Vollbrückenschaltungen, Gleich- oder Wechselrichterschaltungen, Spannungsregler, Stromversorgung, Lampenansteuerschaltungen und dergleichen.

Zusammenfassend kann festgestellt werden, dass durch den wie beschrieben aufgebauten und betriebenen Feldstopp- bzw. PT-IGBT ein für die Zwecke des spannungsentlasteten Schaltens optimiertes Halbleiterbauelement bereitgestellt wird, ohne dass gleichzeitig die Nachteile von als MOSFETs ausgebildeten Halbleiterbauelementen nach dem Stand der Technik in Kauf genommen werden müssen. Insbesondere bei Ausgestaltung des Leistungsschalters als Feldstopp-IGBT eignet sich der Leistungsschalter vor allem auch für den Betrieb bei hohen Temperaturen, da hier keine nennenswerte Temperaturabhängigkeit der schaltbedingten Verlustleistung zu verzeichnen ist.

Die vorliegende Erfindung wurde anhand der vorstehenden Beschreibung so dargelegt, um das Prinzip der Erfindung und dessen praktische Anwendung bestmöglich zu erklären. Selbstverständlich lässt sich die vorliegende Erfindung im Rahmen des fachmännischen Handels und Wissens in geeigneter Weise in mannigfaltigen Ausführungsformen und Abwandlungen realisieren.

**Patentansprüche**

1. Schaltungsanordnung zum entlasteten Schalten

   - mit einem zwischen einem ersten und einem zweiten Versorgungspotential (V1, V2) angeordneten Lade-Kondensator (C),
   - mit einem steuerbaren Leistungsschalter (S),
   - mit einer Diode (D), die antiparallel zur Laststrecke des Leistungsschalters (S) geschaltet ist,
   - mit einem eine Induktivität ($L_R$) und einen Kondensator ($C_K$) aufweisenden Schwingkreis ($L_R$, $C_K$),

   **dadurch gekennzeichnet,**
   **dass** der Leistungsschalter (S) in einem Halbleiterkörper (1) angeordnet ist,

   - mit mindestens einer Innenzone (2) des ersten Leitungstyps,
   - mit mindestens einer in die Innenzone (2) eingebetteten und an eine erste Oberfläche (3) des Halbleiterkörpers (1) angrenzenden Basiszone (4) des zweiten Leitungstyps,
   - mit mindestens einer in jede Basiszone (4) angeordnete Emitterzone (5) des ersten Leitungstyps,
   - mit mindestens einer an die Innenzone (2) angrenzenden Feldstoppzone (12) des ersten Leitungstyps, die eine höhere Dotierungskonzentration als die Innenzone (2) aufweist und
   - mit mindestens einer an die Feldstoppzone (12) angrenzenden Kollektorzone (13) des zweiten Leitungstyps.

2. Schaltungsanordnung nach Anspruch 1,
   **dadurch gekennzeichnet,**
   **dass** die Innenzone (2) und die Feldstoppzone (12) derart ausgestaltet ist, dass dort die ambipolare Ladungsträgerlebensdauer der eines ungestörten Halbleiterkörpers entspricht.

3. Schaltungsanordnung nach Anspruch 2,
   **dadurch gekennzeichnet,**
   **dass** die ambipolare Ladungsträgerlebensdauer größer oder gleich 5 μsec beträgt.

4. Schaltungsanordnung nach einem der vorstehenden Ansprüche,
   **dadurch gekennzeichnet,**
   **dass** die Feldstoppzone (12) eine erste Schichtdicke (d1) aufweist, wobei die erste Schichtdicke (d1) kleiner oder gleich 30 μm, insbesondere kleiner oder gleich 10 μm, insbesondere kleiner oder gleich 1μm, beträgt.

5. Schaltungsanordnung nach einem der vorstehenden Ansprüche,
   **dadurch gekennzeichnet,**
   **dass** die Kollektorzone (13) eine zweite Schichtdicke (d2) aufweist, wobei die zweite Schichtdicke (d2) kleiner oder gleich 5 μm, insbesondere kleiner oder gleich 1μm, beträgt.

6. Schaltungsanordnung nach einem der vorstehenden Ansprüche,
   **dadurch gekennzeichnet,**
   **dass** der Leistungsschalter (S) als Feldstopp-IGBT oder als Punch-Through-IGBT (PT-IGBT) ausgebildet ist.

7. Schaltungsanordnung nach einem der vorstehenden Ansprüche,
   **dadurch gekennzeichnet,**
   **dass** die Schaltungsanordnung für einen Temperaturbereich von -40°C bis 150°C nahezu keine oder eine geringe Temperaturabhängigkeit der schaltbedingten Leistungsverluste aufweist.

8. Schaltungsanordnung nach einem der vorstehenden Ansprüche,
   **dadurch gekennzeichnet,**
   **dass** der Schwingkreis ($L_R$, $C_K$) als Parallelschwingkreis ausgebildet ist, bei dem die Induktivität ($L_R$) und der Kondensator ($C_K$) parallel zueinander angeordnet sind und bei dem die Laststrecke des Leistungsschalters (S) und der Schwingkreis ($L_R$, $C_K$) in Reihe geschaltet sind und zwischen dem ersten und dem zweiten Versorgungspotential (V1, V2) angeordnet sind.

9. Schaltungsanordnung nach einem der vorstehenden Ansprüche,

**dadurch gekennzeichnet,**
**dass** der Schwingkreis ($L_R$, $C_K$) als weitgehend idealer Parallel-Schwingkreis ausgebildet ist und der folgenden Gleichung genügt:

$$\tfrac{1}{2}\, C_K\, U_{CK}, \text{max}^2 = \tfrac{1}{2}\, L_R\, I_{LR,max}^2,$$

wobei mit $U_{CK,max}$ die am Kondensator ($C_K$) abfallende maximale Spannung und mit $I_{LR,max}$ der maximal durch die Induktivität ($L_R$) fließende Strom und bezeichnet ist.

10. Schaltungsanordnung nach einem der Ansprüche 8 oder 9,
    **dadurch gekennzeichnet,**
    **dass** der Kondensator ($C_K$) eine geringere Kapazität aufweist als ein Lastkondensator ($C_L$).

11. Schaltungsanordnung nach einem der vorstehenden Ansprüche,
    **dadurch gekennzeichnet,**
    **dass** der Schwingkreis ($L_R$, $C_K$) als Reihenschwingkreis ausgebildet ist, bei dem die Induktivität ($L_R$) und der Kondensator ($C_K$), der parallel zur Laststrecke des Leistungsschalters (S) geschaltet ist, in Reihe zueinander und zwischen dem ersten und dem zweiten Versorgungspotential (V1, V2) angeordnet sind.

12. Schaltungsanordnung nach einem der vorstehenden Ansprüche,
    **dadurch gekennzeichnet,**
    **dass** die Schaltungsanordnung als Schaltnetzteil oder als getaktete Stromversorgung oder als Spannungsregler oder als Lampenansteuerungsschalter ausgebildet ist.

13. Schaltungsanordnung nach einem der vorstehenden Ansprüche,
    **dadurch gekennzeichnet,**
    **dass** der Schwingkreis zwei Betriebsphasen (I, II) aufweist,

    - wobei der Leistungsschalter (S) während der ersten Betriebsphasen (I) gerade eingeschaltet wird und anschließend im eingeschalteten Zustand befindlich ist, und
    - wobei der Leistungsschalter (S) während der zweiten Betriebsphasen (II) ausgeschaltet ist und der Schwingkreis frei schwingt.

14. Schaltungsanordnung nach Anspruch 13,
    **dadurch gekennzeichnet,**
    **dass** ein Einschaltzeitpunkt des Leistungsschalters (S) und damit der Beginn der ersten Betriebsphasen (I) frei wählbar ist.

15. Schaltungsanordnung nach einem der Ansprüche 13 oder 14,
    **dadurch gekennzeichnet,**
    **dass** eine Pulsweite über die Dauer der ersten Betriebsphasen (I) einstellbar ist.

16. Schaltungsanordnung nach Anspruch 15,
    **dadurch gekennzeichnet,**
    **dass** die Pulsweite in der Ansteuerschaltung (AS) programmierbar ist.

17. Schaltungsanordnung nach einem der Ansprüche 13 bis 16,
    **dadurch gekennzeichnet,**
    **dass** ein Kollektorpotential ($U_C$) am Leistungsschalter (S) während der ersten Betriebsphasen (I) Null ist und während der zweiten Betriebsphasen (II) annähern sinusförmig ausgebildet ist.

18. Verfahren zum Betreiben einer Schaltungsanordnung nach einem der vorstehenden Ansprüche,
    **gekennzeichnet durch**
    einen ersten Betriebsmodus, bei dem eine für einen Verbraucher ($Z_L$) bereitgestellte Leistung über die Pulsanzahl und/oder die Pulsweite und/oder die Abstände zwischen zwei Pulsen während der ersten Betriebsphasen (I) moduliert wird.

19. Verfahren zum Betreiben einer Schaltungsanordnung nach einem der Ansprüche 1 - 17,
    **gekennzeichnet durch**
    einen zweiten Betriebsmodus, bei dem eine für einen Verbraucher ($Z_L$) bereitgestellte Leistung über den Einschaltzeitpunkt (t5) des Leistungsschalters (S) innerhalb der ersten Betriebsphasen (I) moduliert wird.

20. Verfahren nach den Ansprüchen 18 und 19,
    **gekennzeichnet durch**
    einen dritten Betriebsmodus, bei dem die für den Verbraucher ($Z_L$) bereitgestellte Leistung sowohl über den Einschaltzeitpunkt (t5) des Leistungsschalters (S) innerhalb der ersten Betriebsphasen (I) als auch über eine Pulsmodulation moduliert wird.

**Claims**

1. Circuit arrangement for off-load switching

   - having an energy storage capacitor (C), which is arranged between a first and a second supply potential (V1, V2),
   - having a controllable power switch (S),
   - having a diode (D) which is connected back-to-back in parallel with the load path of the power switch (S),

- having a resonant circuit ($L_R$, $C_K$) which has an conductance ($L_R$) and a capacitor ($C_K$)

**characterized**
**in that** the power switch (S) is arranged in a semiconductor body (1),

- having at least one inner zone (2) of the first conductance type,
- having at least one base zone (4) of the second conductance type, which is embedded in the inner zone (2) and is adjacent to a first surface (3) of the semiconductor body (1),
- having at least one emitter zone (5) of the first conductance type, which is arranged in each base zone (4),
- having at least one field stop zone (12) of the first conductance type, which is adjacent to the inner zone (2) and has a higher doping concentration than the inner zone (2), and
- having at least one collector zone (13) of the second conductance type, which is adjacent to the field stop zone (12).

2. Circuit arrangement according to Claim 1,
**characterized**
**in that** the inner zone (2) and the field stop zone (12) are designed as such that the ambipolar charge carrier life there corresponds to that of an undisturbed semiconductor body.

3. Circuit arrangement according to Claim 2,
**characterized**
**in that** the ambipolar charge carrier life is greater than or equal to 5 µs.

4. Circuit arrangement according to one of the preceding claims,
**characterized**
**in that** the field stop zone (12) has a first layer thickness (d1), with the first layer thickness (d1) being less than or equal to 30 µm, in particular less than or equal to 10 µm, and in particular less than or equal to 1 µm.

5. Circuit arrangement according to one of the preceding claims,
**characterized**
**in that** the collector zone (13) has a second layer thickness (d2), with the second layer thickness (d2) being less than or equal to 5 µm, in particular less than or equal to 1 µm.

6. Circuit arrangement according to one of the preceding claims,
**characterized**
**in that** the power switch (S) is in the form of a field stop IGBT, or a punch through IGBT (PT-IGBT).

7. Circuit arrangement according to one of the preceding claims,
**characterized**
**in that** the switching power losses in the circuit arrangement are virtually independent of, or are only slightly dependent on, the temperature, for a temperature range from -40°C to 150°C.

8. Circuit arrangement according to one of the preceding claims,
**characterized**
**in that** the resonant circuit ($L_R$, $C_K$) is in the form of a parallel resonant circuit, in which the inductance ($L_R$) and the capacitor ($C_K$) are arranged in parallel with one another, and in which the load path of the power switch (S) and the resonant circuit ($L_R$, $C_K$) are connected in series, and are arranged between the first and the second supply potential (V1, V2).

9. Circuit arrangement according to one of the preceding claims,
**characterized**
**in that** the resonant circuit ($L_R$, $C_K$) is in the form of a largely ideal parallel resonant circuit, and satisfies the following equation:

$$\tfrac{1}{2}C_K\, U_{CK,max}{}^2 = \tfrac{1}{2}\, L_R\, I_{LR,max}{}^2.$$

where $U_{CK,max}$ is the maximum voltage dropped across the capacitor ($C_K$), and $I_{LR,max}$ is the maximum current flowing through the inductance ($L_R$).

10. Circuit arrangement according to one of Claims 8 and 9,
**characterized**
**in that** the capacitor ($C_K$) has less capacitance than a load capacitor ($C_L$).

11. Circuit arrangement according to one of the preceding claims,
**characterized**
**in that** the resonant circuit ($L_R$, $C_K$) is in the form of a series resonant circuit, in which the inductance ($L_R$) and the capacitor ($C_K$), which is connected in parallel with the load path of the power switch (S), are arranged in series with one another, and are arranged between the first and the second supply potential (V1, V2).

12. Circuit arrangement according to one of the preceding claims,
**characterized**
**in that** the circuit arrangement is in the form of a switch mode power supply, a clocked supply, a voltage regulator or a lamp drive switch.

13. Circuit arrangement according to one of the preceding claims,
**characterized**
**in that** the resonant circuit has two operating phases (I, II),

- with the power switch (S) just having been switched on during the first operating phases (I) and then being in the switched-on state, and
- with the power switch (S) being switched off during the second operating phases (II), and the resonant circuit oscillating freely.

**14.** Circuit arrangement according to Claim 13,
**characterized**
**in that** the switching-on time of the power switch (S), and hence the start of the first operating phases (I), are freely variable.

**15.** Circuit arrangement according to one of Claims 13 or 14,
**characterized**
**in that** a pulse width can be varied over the duration of the first operating phases (I).

**16.** Circuit arrangement according to Claim 15,
**characterized**
**in that** the pulse width can be programmed in the drive circuit (AS).

**17.** Circuit arrangement according to one of Claims 13 to 16,
**characterized**
**in that** a collector potential ($U_C$) on the power switch (S) is zero during the first operating phases (I) and is approximately sinusoidal during the second operating phases (II).

**18.** Method for operating a circuit arrangement according to one of the preceding claims,
**characterized by**
a first operating mode, in which a power which is provided for a load ($Z_L$) is modulated via the number of pulses and/or the pulse width and/or the intervals between two pulses during the first operating phases (I).

**19.** Method for operating a circuit arrangement according to Claims 1 - 17,
**characterized by**
a second operating mode, in which a power which is provided for a load ($Z_L$) is modulated via the switching-on time (t5) of the power switch (S) within the first operating phases (I).

**20.** Method according to Claims 18 and 19,
**characterized by**
a third operating mode, in which the power which is provided for the load ($Z_L$) is modulated both via the switching-on time (t5) of the power switch (S) within the first operating phases (I) and by pulse modulation.

## Revendications

**1.** Circuit de commutation délestée

- avec un condensateur de charge (C) disposé entre un premier et un second potentiel d'alimentation (V1, V2),
- avec un interrupteur de puissance réglable (S),
- avec une diode (D), qui est montée en antiparallèle sur la zone de charge de l'interrupteur de puissance (S),
- avec un circuit oscillant ($L_R$, $C_K$) présentant une inductance ($L_R$) et un condensateur ($C_K$),

**caractérisé en ce que**

- l'interrupteur de puissance (S) est disposé dans un corps semi-conducteur (1)
- avec au moins une zone interne (2) d'une première nature de conductivité,
- avec au moins une zone de base (4) d'une seconde nature de conductivité, incorporée dans la zone interne (2) et adjacente à une première surface (3) du corps semi-conducteur (1),
- avec au moins une zone d'émetteur (5) de la première nature de conductivité disposée dans chaque zone de base (4),
- avec au moins une zone de blocage de champ (12) de la première nature de conductivité adjacente à la zone interne (2), qui présente une concentration de dopage plus élevée que la zone interne (2), et
- avec au moins une zone de collecteur (13) de la seconde nature de conductivité adjacente à la zone de blocage de champ (12).

**2.** Circuit selon la revendication 1,
**caractérisé en ce que**
la zone interne (2) et la zone de blocage de champ (12) sont configurées de telle façon que la durée de vie ambipolaire des porteurs de charge y corresponde à celle d'un corps semi-conducteur non perturbé.

**3.** Circuit selon la revendication 2,
**caractérisé en ce que**
la durée de vie ambipolaire des porteurs de charge est supérieure ou égale à 5 $\mu$s.

**4.** Circuit selon l'une quelconque des revendications précédentes,
**caractérisé en ce que**
la zone de blocage de champ (12) présente une première épaisseur de couche (d1), dans lequel la première épaisseur de couche (d1) est inférieure ou égale à 30 μm, en particulier inférieure ou égale à 10 μm, et en particulier inférieure ou égale à 1 μm.

**5.** Circuit selon l'une quelconque des revendications précédentes,
**caractérisé en ce que**
la zone de collecteur (13) présente une seconde épaisseur de couche (d2), dans lequel la seconde épaisseur de couche (d2) est inférieure ou égale à 5 μm, en particulier inférieure ou égale à 1 μm.

**6.** Circuit selon l'une quelconque des revendications précédentes,
**caractérisé en ce que**
l'interrupteur de puissance (S) est configuré en IGBT à blocage de champ ou en Punch-Through-IGBT (PT-IGBT).

**7.** Circuit selon l'une quelconque des revendications précédentes,
**caractérisé en ce que**
le circuit ne présente, pour un domaine de températures de - 40°C à 150°C, pratiquement aucune ou une faible dépendance des pertes de puissance de commutation en fonction de la température.

**8.** Circuit selon l'une quelconque des revendications précédentes,
**caractérisé en ce que**
le circuit oscillant ($L_R$, $C_K$) est configuré en un circuit oscillant parallèle, dans lequel l'inductance ($L_R$) et le condensateur ($C_K$) sont disposés en parallèle l'un par rapport à l'autre et dans lequel la zone de charge de l'interrupteur de puissance (S) et le circuit oscillant ($L_R$, $C_K$) sont montés en série et sont disposés entre le premier et le second potentiel d'alimentation (V1, V2) .

**9.** Circuit selon l'une quelconque des revendications précédentes,
**caractérisé en ce que**
le circuit oscillant ($L_R$, $C_K$) est configuré en un circuit oscillant parallèle largement idéal et satisfait l'équation suivante :

$$\tfrac{1}{2}\, C_K\, U_{CK,max}^2 = \tfrac{1}{2}\, L_R\, I_{LR,max}^2$$

dans laquelle on désigne par $U_{CK,max}$ la tension maximale aux bornes du condensateur ($C_K$) et par $I_{LR,max}$ le courant maximal circulant à travers l'inductance ($L_R$).

**10.** Circuit selon l'une quelconque des revendications 8 ou 9,
**caractérisé en ce que**

le condensateur ($C_K$) présente une capacité plus faible qu'un condensateur de charge ($C_L$).

**11.** Circuit selon l'une quelconque des revendications précédentes,
**caractérisé en ce que**
le circuit oscillant ($L_R$, $C_K$) est configuré en un circuit oscillant en série, dans lequel l'inductance ($L_R$) et le condensateur ($C_K$), qui est monté en parallèle sur la zone de charge de l'interrupteur de puissance (S), sont disposés en série l'un par rapport à l'autre et entre le premier et le second potentiel d'alimentation (V1, V2).

**12.** Circuit selon l'une quelconque des revendications précédentes,
**caractérisé en ce que**
le circuit est configuré en une partie de réseau de commutation ou en alimentation de courant synchronisée ou en régulateur de tension ou en interrupteur de commande de lampes.

**13.** Circuit selon l'une quelconque des revendications précédentes,
**caractérisé en ce que**
le circuit oscillant présente deux phases de fonctionnement (I, II),

- dans lequel l'interrupteur de puissance (S) est fermé pendant la première phase de fonctionnement (I) et se trouve ensuite en position fermée, et
- dans lequel l'interrupteur de puissance (S) est ouvert pendant la seconde phase de fonctionnement (II) et le circuit oscillant oscille librement.

**14.** Circuit selon la revendication 13,
**caractérisé en ce qu'**
un instant de fermeture de l'interrupteur de puissance (S) et dès lors le commencement de la première phase de fonctionnement (I) peut être choisi librement.

**15.** Circuit selon l'une quelconque des revendications 13 ou 14,
**caractérisé en ce qu'**
une largeur d'impulsion peut être réglée par la durée de la première phase de fonctionnement (I).

**16.** Circuit selon la revendication 15,
**caractérisé en ce que**
la largeur d'impulsion est programmable dans le circuit de commande (AS).

**17.** Circuit selon l'une quelconque des revendications 13 à 16,
**caractérisé en ce qu'**

un potentiel de collecteur (U$_C$) à l'interrupteur de puissance (S) est nul pendant la première phase de fonctionnement (I) et est pratiquement sinusoïdal pendant la seconde phase de fonctionnement (II).

**18.** Procédé d'utilisation d'un circuit selon l'une quelconque des revendications précédentes, **caractérisé par** un premier mode de fonctionnement, dans lequel une puissance préparée pour un consommateur (Z$_L$) est modulée par le nombre d'impulsions et/ou par la largeur d'impulsion et/ou par l'intervalle entre deux impulsions pendant la première phase de fonctionnement (I).

**19.** Procédé d'utilisation d'un circuit selon l'une quelconque des revendications 1 - 17, **caractérisé par** un deuxième mode de fonctionnement, dans lequel une puissance préparée pour un consommateur (Z$_L$) est modulée par l'instant de fermeture (t5) de l'interrupteur de puissance (S) à l'intérieur de la première phase de fonctionnement (I).

**20.** Procédé selon les revendications 18 et 19, **caractérisé par** un troisième mode de fonctionnement, dans lequel la puissance préparée pour le consommateur (Z$_L$) est modulée aussi bien par l'instant de fermeture (t5) de l'interrupteur de puissance (S) à l'intérieur de la première phase de fonctionnement (I) que par une modulation des impulsions.

FIG 1

FIG 2

FIG 3a

I    II

$U_{CK0}$

$U_C$

$U_{CK}$

0

t1 t2    t3 t4

FIG 3b

$I_C$    $I_{LR}$

0

t5    t1 t2    t3 t4    t5

$I_D$

FIG 4

EP 1 287 607 B1

FIG 5

19

FIG 6b

$R_G = 5.0 \Omega$
$V_{GE} = 15V$
$V_{CC} = 480V$

IC = 54A
IC = 27A
IC = 14A

Total Switching Losses (mJ)

10

1

0.1

-60 -40 -20 0 20 40 60 80 100 120 140 160

Tj , Junction Temperature (°C)

FIG 6a

$E = f(Tj)$, inductive load, $V_{CE} = 400V$,
$V_{GE} = 0/+15V$, $I_C = 6A$, $R_G = 50 \Omega$

mWs

E

0.5

0.3

0.2

0.1

0.0

$E_{on}$*

$E_{off}$

0 20 40 60 80 100 120 160 °C

Tj

## FIG 7a

Feldstopp

$V_{CE} = 750\,V\,(100\,V/div)$

$I_C = 8A\,(1A/div)$

t10  t20      t30

t

$[0,5\,\mu s/div]$

## FIG 7b

NPT

$V_{CE} = 750\,V\,(100\,V/div)$

$I_C = 8A\,(1A/div)$

t20      t30

t10

t

$[0,5\,\mu s/div]$